# EUROPÄISCHE PATENTANMELDUNG

(11) **EP 4 782 401 A1**
(43) Veröffentlichungstag der Anmeldung: **29.07.2026**
(21) Anmeldenummer: 25154306.2
(22) Anmeldetag: 28.01.2025
(51) Int. Cl.: C01B 32/50, F25J 3/06

(54) **VERFAHREN UND ANORDNUNG ZUR BEHANDLUNG VON KOHLENDIOXID**

(71) Anmelder: Linde GmbH, 82049 Pullach (DE)
(72) Erfinder: Maniut, Constantin, 82538 Geretsried (DE); Hang, Florian, 82335 Berg (DE)
(74) Vertreter: Fischer, Werner

(57) **Zusammenfassung**

Es wird ein Verfahren (100) zur Behandlung von Einsatzkohlendioxid (1-3) in einem oder mehreren Aggregatzuständen vorgeschlagen, das das Bereitstellen (111-114) von Zweiphasenkohlendioxid (6) unter Verwendung des Einsatzkohlendioxids (1-3), das Speichern (116) des Zweiphasenkohlendioxids (6) unter Ausbildung einer Gasphase und einer Flüssigphase, das Aufreinigen (120) der Gasphase oder eines Teils hiervon unter Erhalt von gasförmigem Reinkohlendioxid (14), das Bereitstellen von überkritischem Reinkohlendioxid (5) unter Verwendung des gasförmigem Reinkohlendioxids (14) oder eines Teils hiervon, und das Verwenden des überkritischen Reinkohlendioxids (5) oder eines Teils hiervon bei dem Bereitstellen (111-114) des Zweiphasenkohlendioxids (6) umfasst. Eine entsprechende Anlage wird ebenfalls vorgeschlagen.

## Beschreibung

### Gebiet

Die vorliegende Offenbarung betrifft ein Verfahren zur Behandlung von Kohlendioxid und eine entsprechende Anordnung.

### Hintergrund

Die globale Erwärmung und der Klimawandel verstärken die weltweiten Bemühungen, die Konzentration von Treibhausgasen wie Kohlendioxid in der Atmosphäre zu reduzieren. Zunehmend gewinnt die Abscheidung von Kohlendioxid aus Rauch- und Prozessgasen an Bedeutung. Solche Rauch- und Prozessgase fallen bei einer Vielzahl von Prozessen in unterschiedlichen Branchen, darunter Energie, Chemie und Stahl, an. Die Abscheidung von Kohlendioxid ist eine Schlüsseltechnologie zur Erreichung der derzeitigen Ziele zur Reduzierung von Kohlendioxidemissionen.

Abgeschiedenes Kohlendioxid kann, wie unten erläutert, unterschiedlichen Einsatzzwecken zugeführt werden. Daher besteht der Bedarf nach wirtschaftlichen, flexiblen und effektiven Wegen zur Bereitstellung für Kohlendioxid, das in unterschiedlichen Reinheitsgraden und Aggregatzuständen anfällt.

### Übersicht

Vor diesem Hintergrund werden ein Verfahren zur Behandlung von Kohlendioxid und eine entsprechende Anordnung mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Behandlung von Einsatzkohlendioxid in einem oder mehreren Aggregatzuständen. Zur Bedeutung des Begriffs "Einsatzkohlendioxid", die vorliegend intendiert ist, sei auf die Erläuterungen zu den vorgeschlagenen Ausführungsformen verwiesen.

Das vorgeschlagene Verfahren umfasst das Bereitstellen von Zweiphasenkohlendioxid unter Verwendung des Einsatzkohlendioxids. Der Begriff "Zweiphasenkohlendioxid" soll dabei im hier verwendeten Sprachgebrauch einen Zweiphasenstrom bzw. ein Zweiphasengemisch oder Zweiphasenfluid mit einem Flüssiganteil und einem Gasanteil bezeichnen, wobei sowohl der Flüssiganteil als auch der Gasanteil im unten erläuterten Sinn reich an Kohlendioxid sind. Der Begriff wird vorliegend lediglich der vereinfachten Bezugnahme halber verwendet.

Das vorgeschlagene Verfahren umfasst ferner das Speichern des Zweiphasenkohlendioxids unter Ausbildung einer Gasphase und einer Flüssigphase, das Aufreinigen der Gasphase oder eines Teils hiervon unter Erhalt von gasförmigem Reinkohlendioxid, das Bereitstellen von überkritischem Reinkohlendioxid unter Verwendung des gasförmigem Reinkohlendioxids oder eines Teils hiervon, und das Verwenden des überkritischen Reinkohlendioxids oder eines Teils hiervon bei dem Bereitstellen des Zweiphasenkohlendioxids. Der Begriff "Reinkohlendioxid" wird vorliegend lediglich deshalb verwendet, um zum Ausdruck zu bringen, dass dieses Kohlendioxid auf einer höheren Reinheit vorliegt als das Einsatzkohlendioxid oder die Gasphase des Zweiphasenkohlendioxids. Eine spezifische Reinheit wird hierdurch nicht angegeben, gleichwohl diese bei beispielsweise 98 bis 99,99% auf Gewichts-, Mol- oder Volumenbasis liegen kann.

Das vorgeschlagene Verfahren ermöglicht die Verarbeitung von Kohlendioxid in sämtlichen Aggregatzuständen ("Einsatzkohlendioxid"), d.h. in gasförmiger, flüssiger und überkritischer Form in einem einzigen System und unter Bereitstellung in einer aufgereinigten und "vereinheitlichten" Form hinsichtlich Aggregatzustand und Reinheit, obwohl dies aus unterschiedlichen Quellen stammen kann.

Die Aufreinigung bzw. Abtrennung von Verunreinigungen erfolgt in dem vorgeschlagenen Verfahren in der Gasphase des Zweiphasenkohlendioxids, d.h. in Flashgas, mit einem deutlich höheren Wirkungsgrad als beispielsweise in dem gesamten Einsatzkohlendioxid. Damit kann eine deutlich höhere Reinheit erreicht werden. Mit einem Flashschritt kann Kälte generiert werden, so dass das zugeführte Einsatzkohlendioxid als Kältemittel verwendet werden kann, da dieses gasförmig oder überkritisch vorliegt. Es wird gewissermaßen ein offener Kältemittelkreislauf geschaffen. Die Kühleinheit, die verwendet wird, um Speicherbedingungen zu erreichen, besteht im einfachsten Fall nur aus einem Flashventil, das besonders einfach und kostengünstig bereitstellbar und hinsichtlich Wartung problemlos ist. Ein weiterer Vorteil der Verwendung des Einsatzkohlendioxids als Kältemittel ist der, dass keine geschlossenen Kältemittelkreisläufe und Kältemittel benötigt werden. Damit entfallen übliche technologische Probleme, die bei Kreislaufprozessen auftreten, insbesondere das Anreichern von bestimmten Komponenten wie beispielsweise nicht kondensierbaren Gasen.

Das Bereitstellen des Zweiphasenkohlendioxids kann in hier vorgeschlagenen Ausgestaltungen das Druckbeaufschlagen und/oder Bereitstellen des Einsatzkohlendioxids oder eines Teils hiervon unter Erhalt von überkritischem Einsatzkohlendioxid umfassen. Auf diese Weise kann das Einsatzkohlendioxid, oder ein Teil hiervon, in eine Form gebracht werden, die in Kombination mit einer anschließenden Entspannung eine vorteilhafte Kältegenerierung und die Bereitstellung des Zweiphasenkohlendioxids in vorteilhafter Form ermöglicht.

In Ausgestaltungen des vorgeschlagenen Verfahrens kann das Bereitstellen des Zweiphasenkohlendioxids ein Entspannen des überkritischen Einsatzkohlendioxids oder dessen beim Bereitstellen des Zweiphasenkohlendioxids verwendetem Teil und des überkritischen Reinkohlendioxids oder dessen beim Bereitstellen des Zweiphasenkohlendioxids verwendetem Teil unter Erhalt des Zweiphasenkohlendioxids umfassen. Wie erwähnt, kann auf diese Weise Kälte generiert und in dem Verfahren genutzt werden. Die Entspannung erfolgt insbesondere mittels einfachen Einrichtungen wie Entspannungsventilen, so dass auf wartungsanfälliges rotierendes Equipment verzichtet werden kann und die Entspannung in besonders kostengünstiger Weise möglich ist.

In Ausgestaltungen des vorgeschlagenen Verfahrens kann das Bereitstellen des Zweiphasenkohlendioxids das Zuspeisen von flüssigem Einsatzkohlendioxid umfassen. Flüssiges Einsatzkohlendioxid kann dabei unter Umgehung der Entspannung direkt in die Flüssigphase des Zweiphasenkohlendioxids überführt werden.

Das Zweiphasenkohlendioxid kann in Ausgestaltungen des vorgeschlagenen Verfahrens insbesondere auf einem Druckniveau von 15 bis 20 bar, 17 bis 19 bar oder insbesondere ca. 18 bar gespeichert werden. Diese Bedingungen ermöglichen eine Speicherung in Standardsystemen wie Tankfarmen und eine besonderes effektive Ausbildung der Gasphase und der Flüssigphase.

In Ausgestaltungen des vorgeschlagenen Verfahrens kann die Flüssigphase oder ein Teil hiervon auf einem unvermindertem Druckniveau gegenüber der Speicherung aus dem Verfahren exportiert werden. Hierbei wird typischerweise kein Flashgas erzeugt, so dass das gesamte Kohlendioxid in der Flüssigphase exportiert werden kann.

In Ausgestaltungen des vorgeschlagenen Verfahrens kann die Flüssigphase oder ein Teil hiervon einer Druckminderung unterworfen und aus dem Verfahren exportiert werden. Dies ermöglicht die Anpassung an einen Bedarf von bestimmten Verbrauchern, die entsprechendes Kohlendioxid benötigen. Die Druckminderung kann in diesem Zusammenhang auf ein Druckniveau von 6 bis 10 bar, insbesondere ca. 7 bar, erfolgen.

Sich bei der erwähnten Druckminderung gebildetes Flashkohlendioxid oder ein Teil hiervon kann überkritisch verdichtet und beim Bereitstellen des Zweiphasenkohlendioxids verwendet werden. Das Flashkohlendioxid kann auf diese Weise in dem Verfahren genutzt werden und geht nicht verloren.

In Ausgestaltungen des vorgeschlagenen Verfahrens kann das Flashkohlendioxid oder dessen beim Bereitstellen des Zweiphasenkohlendioxids verwendeter Teil zunächst einer separaten Verdichtung und danach einer gemeinsamen Verdichtung mit dem gasförmigem Reinkohlendioxid oder dessen beim Bereitstellen des Zweiphasenkohlendioxids verwendetem Teil vorgenommen werden. Dies ermöglicht die erwähnte Nutzung des Flashgases ohne zusätzliche Apparate bzw. nur unter Bereitstellung der separaten Verdichtung.

Das Einsatzkohlendioxid kann in Ausgestaltungen des vorgeschlagenen Verfahrens in flüssiger, gasförmiger und/oder überkritischer Form bereitgestellt werden. Das Einsatzkohlendioxid kann ferner in unterschiedlichen Reinheiten und/oder unter Verwendung von Kohlendioxid, das aus einem oder mehrerer Prozessgasen und/oder unter Verwendung von Kohlendioxid, das aus einem oder mehreren Rauchgasen abgetrennt wurde, bereitgestellt werden. Insbesondere ermöglichen entsprechende Ausgestaltungen die Nutzung von Einsatzkohlendioxid aus unterschiedlichen Quellen und in unterschiedlichen Aggregatzuständen und Reinheiten.

In Ausgestaltungen des vorgeschlagenen Verfahrens kann das Aufreinigen unter Verwendung einer Tieftemperaturrektifikation durchgeführt werden. Grundsätzlich sind unterschiedliche alternative oder zusätzliche Verfahrensschritte zur Aufreinigung nutzbar, beispielsweise absorptive Verfahren, adsorptive Verfahren, Membranverfahren und/oder kondensative Verfahren. Tieftemperaturtrennverfahren eignen sich in besonderer Weise, da durch die vorliegend vorgenommene Entspannung Kälte generiert und insbesondere in den Tieftemperaturtrennverfahren genutzt werden kann.

Die vorgeschlagene Anlage zur Behandlung von Einsatzkohlendioxid in einem oder mehreren Aggregatzuständen ist zum Bereitstellen von Zweiphasenkohlendioxid unter Verwendung des Einsatzkohlendioxids, zum Speichern des Zweiphasenkohlendioxids unter Ausbildung einer Gasphase und einer Flüssigphase, zum Aufreinigen der Gasphase oder eines Teils hiervon unter Erhalt von gasförmigem Reinkohlendioxid, zum Bereitstellen von überkritischem Reinkohlendioxid unter Verwendung des gasförmigem Reinkohlendioxids oder eines Teils hiervon, und zum Verwenden des überkritischen Reinkohlendioxids oder eines Teils hiervon bei dem Bereitstellen des Zweiphasenkohlendioxids eingerichtet.

Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden. Entsprechendes gilt auch für Ausgestaltungen der Anlage, die zur Durchführung eines Verfahrens gemäß einer beliebigen Ausgestaltung eingerichtet sein kann.

### Zeichnungen

Im Rahmen der vorliegenden Offenbarung vorgeschlagene Aspekte werden anhand der beiliegenden Zeichnung näher erläutert. Dabei zeigt

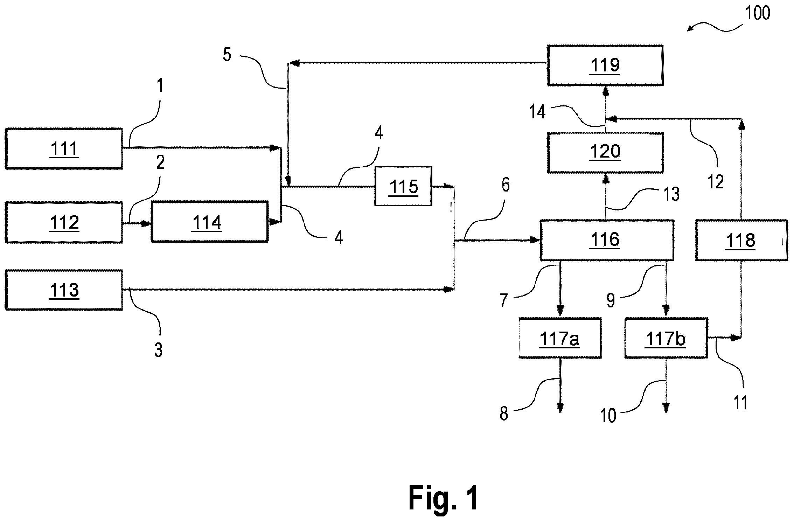

Figur 1 ein Verfahren gemäß einer vorgeschlagenen Ausgestaltung.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Die im Rahmen der vorliegenden Offenbarung verwendeten Begriffe haben grundsätzlich die in der Fachwelt anerkannten Bedeutungen. So sei zu den hier verwendeten Begriffen auf übliche Fachliteratur verwiesen. Sämtliche hier verwendete Prozentangaben können sich auf Mol-, Mengen- oder Volumenanteile beziehen. In der Einheit bar angegebene Drücke oder Druckbereiche sind, soweit nicht anders erläutert, insbesondere als Absolutdrücke zu verstehen.

Flüssigkeiten, Gase und überkritische Fluide können im üblichen Sprachgebrauch reich oder arm an einer oder an mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1 %, 0,1% oder 0,01 % stehen kann. Begriffe wie beispielsweise "überwiegend enthaltend", "im Wesentlichen enthaltend" und dergleichen können der Definition von "reich" entsprechen.

Flüssigkeiten, Gase und überkritische Fluide können ferner angereichert oder abgereichert an einer oder mehreren Komponenten sein, wobei sich diese Begriffe auf einen Gehalt in einer Ausgangsflüssigkeit, einem Ausgangsgas oder einem überkritischen Ausgangsfluid beziehen, aus der oder dem die betrachtete Flüssigkeit oder das betrachtete Gas gewonnen wurde. Die Flüssigkeit, das Gas oder das überkritische Fluid ist beispielsweise "angereichert", wenn diese oder dieses zumindest den 1,1-fachen, 1,5-fachen, 2-fachen, 5-fachen, 10-fachen 100-fachen oder 1.000-fachen Gehalt einer betrachteten Komponente, bezogen auf die Ausgangsflüssigkeit, das Ausgangsgas oder das überkritischen Ausgangsfluid, enthält. Die Flüssigkeit, das Gas oder das überkritische Fluid ist beispielsweise "abgereichert", wenn diese oder dieses höchstens den 0,9-fachen, 0,5-fachen, 0,1-fachen, 0,01-fachen oder 0,001-fachen Gehalt einer betrachteten Komponente, bezogen auf die Ausgangsflüssigkeit, das Ausgangsgas oder das überkritischen Ausgangsfluid, enthält.

Begriffe wie "Einsatzflüssigkeit", "Einsatzgas" oder "überkritisches Einsatzfluid" bezeichnen dabei, auch in Form anderer Formulierungen wie "Einsatzkohlendioxid" und dergleichen, eine Flüssigkeit, ein Gas oder ein überkritisches Fluid, das zur Bereitstellung einer anderen Flüssigkeit, eines anderen Gases oder eines anderen überkritischen Fluids verwendet wird. Zur Differenzierung können für die andere Flüssigkeit, das andere Gas oder das andere überkritische Fluid auch Begriffe wie beispielsweise "Folgeflüssigkeit", "Folgegeas" oder "überkritisches Folgefluid" verwendet werden. Die Bildung der Folgeflüssigkeit, des Folgegeases oder des überkritischen Folgefluids unter Verwendung der Einsatzflüssigkeit, des Einsatzgases oder des überkritischen Einsatzfluids kann unter Verwendung von Bearbeitungsschritten erfolgen, die eine Reinigung, Entspannung, Verdichtung, Fraktionierung und Vereinigung, auch unter Phasenwechsel, umfassen können. Allgemein können hier Schritte zum Einsatz kommen, wie sie nachfolgend für den Begriff "gebildet" diskutiert werden.

Eine Folgeflüssigkeit, ein Folgegas oder ein überkritisches Folgefluid ist aus oder unter Verwendung einer Einsatzflüssigkeit, eines Einsatzgases oder eines überkritischen Einsatzfluids "gebildet" oder wird hieraus "erhalten" und/oder unter Verwendung desselben "bereitgestellt", wenn es zumindest einige in der Einsatzflüssigkeit, dem Einsatzgas oder dem überkritischen Einsatzfluid enthaltene oder aus diesem erhaltene Komponenten aufweist. Eine Folgeflüssigkeit, ein Folgegas oder ein überkritisches Fluid kann aus der Einsatzflüssigkeit, dem Einsatzgas oder dem überkritischen Einsatzfluid durch Abtrennen oder Abzweigen eines Anteils oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen und dergleichen gebildet werden. Ein Eine Folgeflüssigkeit, ein Folgegas oder ein überkritisches Folgefluid kann auch beispielsweise einfach dadurch "gebildet" werden, dass sie oder es aus einem Speicherbehälter abgezogen wird.

Wird vorliegend eine Flüssigkeit, ein Gas oder ein überkritisches Fluid mit einer der enthaltenen Komponenten oder als Mischung zweier oder mehrerer Komponenten bezeichnet, ist also beispielsweise von "Kohlendioxid", "Sauerstoff" oder "Stickstoff", oder auch von einem "Kohlendioxid-Sauerstoff-Gemisch" die Rede, seien hierunter auch Flüssigkeiten, Gase oder überkritische Fluide verstanden, die reich an der einen oder den mehreren bezeichneten Komponenten sind, jedoch nicht notwendigerweise ausschließlich hieraus bestehen müssen.

Zur Charakterisierung von Drücken und Temperaturen werden vorliegend insbesondere die Begriffe "Druckniveau" und "Temperaturniveau" verwendet, wodurch zum Ausdruck gebracht werden soll, dass entsprechende Drücke und Temperaturen nicht notwendigerweise in Form exakter Druck- bzw. Temperaturwerte verwendet werden müssen, um eine bestimmte Lösung zu realisieren. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus. Bei dem hier in bar angegebenen Druckniveaus handelt es sich um Absolutdrücke.

Die Konjunktion "und/oder" soll, wenn in einer Aufzählung vor dem letzten Element der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B, C in beliebiger Kombination" gemeint.

In Anlagen der eingangs erläuterten Art abgeschiedenes Kohlendioxid kann in unterschiedlichen Reinheiten, Aggregatzuständen, auf unterschiedlichen Druckniveaus und auf unterschiedlichen Temperaturniveaus bereitgestellt werden. So stehen beispielsweise je nach Quelle unterschiedliche Techniken zur Abscheidung von Kohlendioxid zur Verfügung, die ggf. derartige Unterschiede zur Folge haben. Auch je nach dem vorgesehenen Transportweg oder der vorgesehenen Lagerung können beispielsweise bestimmte Aggregatzustände und Druckbedingungen vorteilhaft sein.

So wird für einen Transport per Tankschiff beispielsweise flüssiges Kohlendioxid bevorzugt, wohingegen für eine Tanklagerung auch ein zweiphasiger oder gasförmiger Zustand vorteilhaft sein kann. In anderen Fällen kann auch beispielsweise überkritisches Kohlendioxid anfallen.

Die Reinheit von Kohlendioxid kann auch aus der spezifischen Art oder Position der Abtrennung im Prozess resultieren, wobei nachfolgend zunächst allgemein auf die Abscheidung von Kohlendioxid unter Einbeziehung unterschiedlicher Varianten, und zwar in jedem einzelnen Fall lediglich beispielhaft und ohne Einschränkung der Erfindung, Bezug genommen wird.

Die Abscheidung von Kohlendioxid aus Gasgemischen wie Rauchgas, das typischerweise aus industriellen Prozessen wie Kraftwerken, Zementwerken oder chemischen Produktionsanlagen stammt, ist, wie die Abscheidung aus Prozessgasen wie Synthesegas, ein vergleichsweise aufwendiger Prozess. Hierfür stehen unterschiedliche Technologien zur Verfügung.

Ein weit verbreitetes Verfahren zur Abscheidung von Kohlendioxid ist die chemische Absorption, bei der das Ausgangsgasgemisch durch eine spezielle Absorptionslösung, meist auf Basis von Aminen, geleitet wird. Die Absorptionslösung bindet das Kohlendioxid chemisch. Durch Erhitzen der beladenen Absorptionslösung in einer Regeneriereinheit wird das Kohlendioxid wieder freigesetzt und in konzentrierter Form gewonnen. Alternativ kann die Adsorption eingesetzt werden, bei der Kohlendioxid auf festen Materialien wie Zeolithen oder Aktivkohle gebunden wird. Das gebundene Kohlendioxid wird durch Druck- oder Temperaturänderung freigesetzt. Weitere Möglichkeiten umfassen die Membrantrennung, bei der Kohlendioxid durch selektive Membranen aus dem Gasgemisch herausgefiltert wird, und die kryogene Abscheidung, bei der das Ausgangsgasgemisch stark abgekühlt wird, sodass Kohlendioxid kondensiert und abgetrennt werden kann.

Auch Kombinationen der genannten Abscheidungstechniken können, beispielsweise zur Grob- und Feinreinigung, eingesetzt werden. Die Wahl der jeweils verwendeten Abscheidetechnik richtet sich dabei nach Ausgangsbedingungen wie Konzentration, Druck, Temperatur und dergleichen.

Die Verflüssigung von abgeschiedenem Kohlendioxid kann beispielsweise unter Verwendung von flüssigem oder verdampfendem Ammoniak oder anderen Kältemitteln vorgenommen werden. Sie dient beispielsweise, wie erwähnt, dazu, Kohlendoxid in eine gewünschte Transportform zu überführen, oder in eine Form, in der es für industrielle Anwendungen oder die Speicherung genutzt werden kann. Im Folgenden wird der Prozess der Verflüssigung näher beschrieben.

Nach der Abscheidung ist das Kohlendioxid oft mit Verunreinigungen wie Wasserdampf, Schwefelverbindungen oder Stickoxiden belastet. Diese müssen in einem oder mehreren Reinigungsschritten entfernt werden, um die gewünschte Reinheit zu gewährleisten. Wasserdampf wird dabei beispielsweise durch Trocknungsmittel oder Abkühlung entfernt, während Schwefeldioxid und Stickoxide durch chemische oder physikalische Verfahren eliminiert werden. Eine gründliche Reinigung ist insbesondere bei Anwendungen erforderlich, die hohe Anforderungen an die Reinheit des Kohlendioxid stellen, wie die Herstellung von Trockeneis oder die Lebensmittelverarbeitung.

Das gereinigte Kohlendioxid wird dann in einem oder mehreren Verdichtungsschritten mit vergleichsweise hohem Druck beaufschlagt. Für die Verflüssigung wird das Kohlendioxid typischerweise auf einem Druckniveau von mindestens 52 bar gebracht. Während der Verdichtung entsteht Wärme, die durch geeignete Kühlsysteme abgeführt werden muss, um die Prozessstabilität zu gewährleisten.

Im nächsten Schritt wird das verdichtete Kohlendioxid für die eigentliche Verflüssigung auf eine niedrige Temperatur abgekühlt. Durch den hohen Druck und die Abkühlung wird das Kohlendioxid in den flüssigen Zustand überführt, wohingegen es bei atmosphärischem Druck sublimieren würde. Dies erfolgt häufig mithilfe von Wärmetauschern, die das Kohlendioxid weiter abkühlen, bis der Phasenübergang abgeschlossen ist. Typischerweise liegt das Temperaturniveau für flüssiges Kohlendioxid bei etwa 20 °C oder darunter, abhängig vom angewandten Druck.

Das flüssige Kohlendioxid wird schließlich in isolierten Tanks gelagert oder transportiert, die sowohl den erforderlichen Druck als auch die niedrige Temperatur aufrechterhalten. Für den Transport stehen spezielle Container zur Verfügung, die eine sichere Beförderung ermöglichen. Flüssiges Kohlendioxid wird in zahlreichen industriellen Anwendungen genutzt, etwa bei der Herstellung von kohlensäurehaltigen Getränken, in der chemischen Synthese oder als Kühlmittel.

Der gesamte Prozess ist energieintensiv und erfordert eine präzise Steuerung der Betriebsbedingungen. Dennoch ist die Abscheidung und Verflüssigung von Kohlendioxid ein wichtiger Schritt in Richtung einer nachhaltigeren Industrie, insbesondere im Kontext von Kohlendioxidabscheidung und -speicherung (Carbon Capture and Storage, CCS, auch als Capturing Carbon for Use or Storage, CCUS, bezeichnet), mit dem Ziel, die Treibhausgasemissionen zu reduzieren.

Kohlendioxid kann aus einem Gasgemisch abgeschieden werden, bevor dieses einem Verbrennungsprozess zugeführt. Bei Reformierungs- und Vergasungsprozessen reagieren fossile Brennstoffe mit Luft oder reinem Sauerstoff und erzeugen ein Synthesegas aus Wasserstoff, Kohlenmonoxid und Kohlendioxid. Kohlendioxid wird in solchen Fällen aus dem Synthesegasstrom abgetrennt, bevor die Verbrennung oder die weitere chemische Nutzung des Synthesegases erfolgt. Dies bedingt ggf. eine geringere Menge von abzutrennenden Verunreinigungen.

Bei der sogenannten Oxyfuelverbrennung verbrennen Brennstoffe in einer fast reinen sauerstoffhaltigen Umgebung. Sauerstoff wird aus der Luft abgetrennt und dann mit einem fossilen Brennstoff verbrannt, um Kohlendioxid und Wasserdampf zu erzeugen. Diese Verbrennung treibt beispielsweise Turbinen an und erzeugt Strom. Anschließend wird der Wasserdampf gekühlt, kondensiert und entfernt, während das Kohlendioxid abgeschieden, wird. Aufgrund der stickstoffarmen oder -freien Verbrennung weist das Kohlendioxid andere Verunreinigungen auf.

Kohlendioxid kann auch nach dem Verbrennungsprozess aus einem Abgas abgetrennt werden. Hierbei handelt es sich um die am häufigsten verwendete Technologie zur Nachrüstung von Industrie- und Energieerzeugungsanlagen. Das bei der Verbrennung fossiler Brennstoffe entstehende Rauchgas strömt dabei durch eine Absorbersäule mit zirkulierendem flüssigem Absorptionsmittel, das das Kohlendioxid auswäscht. Auch hierdurch ergeben sich andere Qualitäten von Kohlendioxid.

Kohlendioxid aus einer Vielzahl unterschiedlicher Abscheidungsprozesse und Quellen sollte dabei möglichst flexibel und standardisiert und mit vergleichbarer Reinheit bereitgestellt und distributiert werden können, auch um Mindermengen aus einer Quelle durch eine andere Quelle auszugleichen. Dies wird durch die hier vorgeschlagenen Ausgestaltungen erzielt.

Figur 1 veranschaulicht dabei ein Verfahren gemäß einer hier vorgeschlagenen Ausgestaltung in Form eines vereinfachten Blockdiagramms. Das Verfahren ist insgesamt mit 100 bezeichnet. Wie erwähnt, können die jeweils als Verfahrensschritte bezeichneten und veranschaulichten Elemente auch entsprechende Anlagenkomponenten bezeichnen.

Dem Verfahren 100 kann über einen Bereitstellungsschritt 111 überkritisches Kohlendioxid 1, über einen Bereitstellungsschritt 112 gasförmiges Kohlendioxid 2, und über einen Bereitstellungsschritt 113 flüssiges Kohlendioxid 3 zugeführt werden. Vorliegend wird jeweils der Begriff "Einsatzkohlendioxid" verwendet. Die Bereitstellung kann in unterschiedlicher Weise, beispielsweise über Tankschiffe, Tanklaster, Pipelines, aus Tanks oder direkt aus einer Anlage zur Abscheidung von Kohlendioxid aus Rauch- oder Prozessgas erfolgen. Das Verfahren 100 kann beliebige der Bereitstellungsschritte 111, 112, 113 und Kombinationen umfassen, die jeweils auch entfallen können

Bei Bedarf kann, hinsichtlich des gasförmigen Kohlendioxids 102, auch eine zusätzliche Verdichtung 114 erfolgen, um dieses auf ein geeignetes Druckniveau zu bringen. Das überkritische Kohlendioxid 1 und das gasförmige Kohlendioxid 2 können unter Erhalt eines Sammelstroms 4 vereinigt werden, und diesem Sammelstrom, oder den jeweiligen Einzelströmen, kann überkritisches Kohlendioxid 5, beispielsweise auf einem Druckniveau von über 95 bar, zugespeist werden.

Der weiter mit 4 bezeichnete Sammelstrom kann dann in einem Flash- bzw. Entspannungsschritt 115, beispielsweise unter Verwendung eines oder mehrerer Entspannungsventile, entspannt werden, um nach Vereinigung mit dem flüssigen Kohlendioxid 3 ein Zweiphasengemisch 6 zu erhalten, das beispielsweise auf einem Druckniveau von ca. 18 bar vorliegt. Dieses wird einem Speicherschritt 116 beispielsweise in einem Tanksystem oder einer Tankfarm mit einem oder mehreren wärmeisolierten Drucktanks gespeichert. Die Speicherung erfolgt dabei in Form des Zweiphasengemischs 6, d.h. auf einem Druckniveau von ca. 18 bar. Hierbei bilden sich eine Flüssigphase und eine die Flüssigphase überlagernde Gasphase aus.

Flüssiges Kohlendioxid 7 aus einem entsprechenden Tanksystem kann über einen Mitteldruckexportschritt 117a aus dem Verfahren 100 als flüssiges Exportkohlendioxid 8 auf einem Druckniveau von ca. 18 bar exportiert werden. Weiteres flüssiges Kohlendioxid 9 kann unter entsprechender Entspannung über einen Niederdruckexportschritt 117b aus dem Verfahren 100 als flüssiges Exportkohlendioxid 10 auf einem Druckniveau von ca. 7 bar exportiert werden. Weiteres Kohlendioxid 11 aus dem Niederdruckexportschritt 117, also Flashkohlendioxid, kann auf einem Druckniveau von ca. 7 bar einer Rückverdichtung 118 auf ca. 18 bar unterworfen und danach in Form eines Kohlendioxidstroms 12 einer überkritischen Verdichtung 119 zugeführt werden, die das überkritische Kohlendioxid 5 liefert.

Gasförmiges Kohlendioxid 13 aus einem entsprechenden Tanksystem bzw. dem Speicherschritt 116 kann auf einem Druckniveau von ca. 18 bar einem oder mehreren Aufreinigungsschritten 120 unterworfen werden, der oder die beispielsweise eine Tieftemperaturrektifikation umfassen kann oder können, und der oder die einen aufgereinigten Kohlendioxidstrom 14, also Reinkohlendioxid, liefern. Abgetrennte Ströme sind aus Gründen der Übersichtlichkeit nicht gesondert veranschaulicht. Der Kohlendioxidstrom 14 kann anschließend ebenfalls der überkritischen Verdichtung 119 zugeführt werden.

Durch die Rückführung des überkritischen Kohlendioxidstroms 5 wird ein Kreislauf gebildet, der dafür sorgt, dass der oder die Aufreinigungsschritte 120 wiederholt durchlaufen werden und somit insgesamt reines Kohlendioxid erhalten wird. Da es sich um einen offenen Kreislauf handelt, kommt es nicht zu einer Anreicherung unerwünschter Komponenten.

Wie bereits zuvor angesprochen, ermöglicht das vorgeschlagene Verfahren die Verarbeitung von Kohlendioxid 1, 2, 3 in sämtlichen Aggregatzuständen, d.h. in gasförmiger, flüssiger und überkritischer Form in einem einzigen System. Die Aufreinigung bzw. Abtrennung von Verunreinigungen kann in dem gasförmigen Kohlendioxid 13, d.h. im Flashgas, mit einem deutlich höheren Wirkungsgrad als beispielsweise in einem der Ausgangsströme erzielt. Damit kann eine deutlich höhere Reinheit erreicht werden. Mit dem Flashschritt 115 kann Kälte generiert werden, so dass das eigene, zugeführte Kohlendioxid 1, 2 als Kältemittel verwendet werden kann, da dieses gasförmig oder überkritisch vorliegt. Es wird gewissermaßen ein offener Kältemittelkreislauf geschaffen. Die Kühleinheit um Speicherbedingungen zu erreichen, besteht im einfachsten Fall nur aus einem Flashventil, das besonders einfach und kostengünstig bereitstellbar und hinsichtlich Wartung problemlos ist.

## Patentansprüche

1. Verfahren (100) zur Behandlung von Einsatzkohlendioxid (1-3) in einem oder mehreren Aggregatzuständen, das umfasst:
Bereitstellen (111-114) von Zweiphasenkohlendioxid (6) unter Verwendung des Einsatzkohlendioxids (1-3);
Speichern (116) des Zweiphasenkohlendioxids (6) unter Ausbildung einer Gasphase und einer Flüssigphase;
Aufreinigen (120) der Gasphase oder eines Teils hiervon unter Erhalt von gasförmigem Reinkohlendioxid (14);
Bereitstellen von überkritischem Reinkohlendioxid (5) unter Verwendung des gasförmigem Reinkohlendioxids (14) oder eines Teils hiervon; und
Verwenden des überkritischen Reinkohlendioxids (5) oder eines Teils hiervon bei dem Bereitstellen (111-114) des Zweiphasenkohlendioxids (6).

2. Verfahren (100) nach Anspruch 1,
wobei das Bereitstellen (111, 112, 113, 114) des Zweiphasenkohlendioxids (6) das Druckbeaufschlagen und/oder Bereitstellen des Einsatzkohlendioxids (1, 2, 3, 4) oder eines Teils hiervon unter Erhalt von überkritischem Einsatzkohlendioxid (4) umfasst.

3. Verfahren (100) nach Anspruch 2,
wobei das Bereitstellen (111, 112, 113, 114) des Zweiphasenkohlendioxids (6) ein Entspannen (114) des überkritischen Einsatzkohlendioxids (4) oder dessen beim Bereitstellen (111, 112, 113, 114) des Zweiphasenkohlendioxids (6) verwendetem Teil und des überkritischen Reinkohlendioxids (5) oder dessen beim Bereitstellen (111, 112, 113, 114) des Zweiphasenkohlendioxids (6) verwendetem Teil unter Erhalt des Zweiphasenkohlendioxids (6) umfasst.

4. Verfahren (100) nach einem der vorstehenden Ansprüche,
wobei das Bereitstellen (111, 112, 113, 114) des Zweiphasenkohlendioxids (6) das Zuspeisen von flüssigem Einsatzkohlendioxid (3) umfasst.

5. Verfahren (100) nach einem der vorstehenden Ansprüche,
wobei das Zweiphasenkohlendioxid (6) auf einem Druckniveau von 15 bis 20 bar, 17 bis 19 bar oder 18 bar gespeichert wird.

6. Verfahren (100) nach einem der vorstehenden Ansprüche,
wobei die Flüssigphase oder ein Teil hiervon auf einem unvermindertem Druckniveau gegenüber der Speicherung aus dem Verfahren (100) exportiert wird.

7. Verfahren (100) nach einem der vorstehenden Ansprüche,
wobei die Flüssigphase oder ein Teil hiervon einer Druckminderung unterworfen und aus dem Verfahren (100) exportiert wird.

8. Verfahren (100) nach Anspruch 7,
wobei sich bei der Druckminderung gebildetes Flashkohlendioxid (11) oder ein Teil hiervon überkritisch verdichtet und beim Bereitstellen (111, 112, 113, 114) des Zweiphasenkohlendioxids (6) verwendet wird.

9. Verfahren (100) nach Anspruch 8,
wobei das Flashkohlendioxid (11) oder dessen beim Bereitstellen (111, 112, 113, 114) des Zweiphasenkohlendioxids (6) verwendeter Teil zunächst einer separaten Verdichtung (118) und danach einer gemeinsamen Verdichtung (119) mit dem gasförmigem Reinkohlendioxid (14) oder dessen beim Bereitstellen (111, 112, 113, 114) des Zweiphasenkohlendioxids (6) verwendetem Teil vorgenommen wird.

10. Verfahren (100) nach einem der vorstehenden Ansprüche,
wobei das Einsatzkohlendioxid (1, 2, 3) in flüssiger, gasförmiger und/oder überkritischer Form bereitgestellt wird.

11. Verfahren (100) nach einem der vorstehenden Ansprüche,
wobei das Einsatzkohlendioxid (1, 2, 3) in unterschiedlichen Reinheiten bereitgestellt wird.

12. Verfahren (100) nach einem der vorstehenden Ansprüche,
wobei das Einsatzkohlendioxid (1, 2, 3) unter Verwendung eines oder mehrerer Prozessgase und/oder unter Verwendung eines oder mehrerer Rauchgase durch Abtrennung bereitgestellt wird.

13. Verfahren (100) nach einem der vorstehenden Ansprüche,
wobei das Aufreinigen (120) unter Verwendung einer Tieftemperaturrektifikation durchgeführt wird.

14. Anlage zur Behandlung von Einsatzkohlendioxid (1-3) in einem oder mehreren Aggregatzuständen, das für Folgendes eingerichtet ist:
Bereitstellen (111-114) von Zweiphasenkohlendioxid (6) unter Verwendung des Einsatzkohlendioxids (1-3);
Speichern (116) des Zweiphasenkohlendioxids (6) unter Ausbildung einer Gasphase und einer Flüssigphase;
Aufreinigen (120) der Gasphase oder eines Teils hiervon unter Erhalt von gasförmigem Reinkohlendioxid (14);
Bereitstellen von überkritischem Reinkohlendioxid (5) unter Verwendung des gasförmigem Reinkohlendioxids (14) oder eines Teils hiervon; und
Verwenden des überkritischen Reinkohlendioxids (5) oder eines Teils hiervon bei dem Bereitstellen (111-114) des Zweiphasenkohlendioxids (6).

15. Anlage nach Anspruch 14,
wobei die Anlage zur Durchführung eines Verfahrens nach einem der Ansprüche 1 bis 13 eingerichtet ist.
